# EUROPÄISCHE PATENTSCHRIFT

(11) **EP 0 636 827 B1**
(45) Veröffentlichungstag und Bekanntmachung des Hinweises auf die Patenterteilung: **04.02.1998**
(21) Anmeldenummer: 94111093.4
(22) Anmeldetag: 16.07.1994
(51) Int. Cl.: F16L 41/02, F23J 13/04, F24H 8/00, F16L 55/115

(54) **Rohrleitungs-Formstück für Abgasanlagen, insbesondere für Brennwertgeräte**
Pipe profile for exhaust gas systems, especially for condensing boilers
Tuyau profilé pour systèmes de gaz d'échappement, notamment pour chaudière à condensation

(30) Priorität: 30.07.1993 DE 9311424 U
(43) Veröffentlichungstag der Anmeldung: 01.02.1995
(73) Patentinhaber: Skoberne, Willi, D-64342 Seeheim-Jugenheim (DE)
(72) Erfinder: Skoberne, Willi, D-64342 Seeheim-Jugenheim (DE)
(74) Vertreter: Katscher, Helmut, Dipl.-Ing.

(56) Entgegenhaltungen:
- DE-A- 2 740 742
- DE-U- 9 111 394
- US-A- 3 869 154
- US-A- 4 603 680
- US-A- 4 923 221

## Beschreibung

Die Erfindung betrifft ein Rohrleitungs-Formstück für Abgasanlagen für Brennwertgeräte mit einem Rohrgrundkörper, der an seinem Austrittsende eine Rohranschlußmuffe und an seinem anderen Ende sowie in seiner Seitenwand jeweils eine Anschlußöffnung aufweist.

Abgasanlagen für Brennwertgeräte, insbesondere für Gebäudeheizungen weisen Abgasleitungen auf, deren Rohre und Formstücke aus Kunststoff, vorzugsweise Polypropylen (PPS), PVDF oder anderen Kunststoffen hergestellt werden können, sofern die angeschlossenen Feuerstätten keine Abgase mit höheren Temperaturen als 160°C (Abgasanlage Typ C) erzeugen. Bei Abgasanlagen des Typs B beträgt die maximal zulässige Abgastemperatur 120°C und bei Abgasanlagen des Typs A 80°C.

Derartige Abgasanlagen werden aus Rohren und unterschiedlichen Formstücken montiert, deren Verbindung überwiegend durch Rohrmuffen erfolgt. Ein wesentlicher Vorteil derartiger Abgasanlagen liegt in der einfachen und schnellen Montage. Da die niedrigen Abgastemperaturen der Feuerstätten dazu führen, daß bei bestimmungsgemäßer Betriebsweise die Abgase bis unter deren Taupunkttemperaturen abgekühlt werden können, kommt es auch innerhalb der Abgasleitungen zu einer Kondensation der Abgase. Das Kondensat wird durch eine Kondensatableitung abgeführt. Die Muffen der Rohre und Formstücke sind gegen die Fließrichtung des Kondensats angeordnet. Im Verlauf der Abgasleitung müssen Formstücke vorgesehen werden, die eine Reinigung und Kontrolle der Abgasleitung ermöglichen. Hierzu weisen diese Formstücke seitliche Anschlußöffnungen auf, die üblicherweise mit einem Schraubdeckel verschlossen sind.

Wegen der unterschiedlichen Anforderungen und unterschiedlichen Anordnungen im Verlauf der Abgasleitung müssen unterschiedliche Rohrleitungs-Formstücke bereitgestellt werden, um eine Abgasanlage zu montieren. Dies bedingt einen verhältnismäßig hohen Aufwand für die Herstellung und die Lagerhaltung dieser Formstücke. Insbesondere handelt es sich dabei um Reinigungs-Formstücke mit Schraubdeckel, T-Stücke mit Deckel, Kesselanschlußstücke mit Anschlüssen für Sicherheitstemperaturbegrenzer und Abgasmeßvorrichtungen, Abzweige, Abzweige mit Kondensatabscheider-Anschluß, Kontrollstücke, auch mit Abgasmeßvorrichtung, und Revisionsstücke mit Deckel.

Aufgabe der Erfindung ist es, ein Rohrleitungs-Formstück der eingangs genannten Gattung zu schaffen, das aus wenigen, miteinander kombinierbaren Teilen besteht, die nach Art eines Bausatzes in unterschiedlicher Weise miteinander kombiniert werden können, um für die unterschiedlichen genannten Formstücke verwendet zu werden. Dadurch soll eine wesentliche Vereinfachung der Herstellung und der Lagerhaltung erreicht werden.

Zu diesem Zwech ist es aus der DE-A-2 740 742 bekannt, ein Rohrverbindungsstück mit quaderförmingem grundkörper vorzusehen, an dessen Öffnungen Anschlußstücke mit Innen- oder Außengeminde, Anschlußstutzen, Deckel etc. angebracht sind. Auf diese Weise wird ein T-förmiges Verbindungselement geschaffen, den an unterschiedliche Bornstellengegeben heiten leicht anzupassen ist.

Diese Aufgabe wird erfindungsgemäß bei einem Rohrleitungs-Formstück der eingangs genannten Gattung dadurch gelöst, daß der Rohrgrundkörper an den beiden Anschlußöffnungen jeweils mit Außengewinde versehen ist, daß ein Muffenanschlußstutzen mittels eines Gewinderings wahlweise mit einer der beiden Anschlußöffnungen verbindbar ist, daß ein Verschlußstück auf die jeweils andere Anschlußöffnung aufschraubbar ist, und daß die Achse der Anschlußöffnung an der Seitenwand des Rohrgrundkörpers mit dessen Längsachse zum Austrittsende hin einen Winkel von über 90° bildet.

Dieses Rohrleitungs-Formstück kann für die vorher genannten unterschiedlichen Funktionen eingesetzt werden. Wenn es in eine geradlinig durchgehende Rohrleitung eingesetzt wird, wird der Muffenanschlußstutzen auf die Anschlußöffnung aufgeschraubt, die dem Austrittsende fluchtend gegenüberliegt. Auf die seitliche Anschlußöffnung wird ein Verschlußstück aufgeschraubt, das beispielsweise ein geschlossener Deckel ist, wenn das Formstück als Revisionsstück oder Reinigungsstück eingesetzt wird.

Bei der Verwendung als Kontrollstück ist das seitlich aufgesetzte Verschlußstück ein Deckel mit einer durch einen Schraubstopfen verschlossenen Meßöffnung.

Wenn das Formstück ein Leitungsknie bilden soll, wird der Muffenanschlußstutzen auf die seitliche Anschlußöffnung aufgeschraubt, und die dem Austrittsende gegenüberliegende Anschlußöffnung wird in der beschriebenen Weise mit einem Deckel verschlossen (als Revisions- oder Kontrollstück). Der Deckel kann auch eine durch einen Schraubstopfen verschlossene Meßöffnung aufweisen, wenn das Formstück die Funktion eines Kontrollstücks haben soll.

Das auf die seitliche Anschlußöffnung aufgeschraubte Verschlußstück kann auch einen Rohranschlußstutzen zum Anschluß einer Kondensatableitung aufweisen; damit erhält man einen Abzweig für einen Kondensatabscheider.

Weitere vorteilhafte Ausgestaltungen des Erfindungsgedankens sind Gegenstand weiterer Unteransprüche.

Die Erfindung wird nachfolgend an Ausführungsbeispielen näher erläutert, die in der Zeichnung dargestellt sind. Es zeigt:
Fig. 1 in einer Seitenansicht und teilweise im Schnitt ein Rohrleitungs-Formstück, das beispielsweise als Revisionsstück dient,
Fig. 2 ein Rohrleitungs-Formstück, das ein Leitungsknie bildet und zugleich als Kontrollstück dient, und
Fig. 3 ein Rohrleitungs-Formstück als Abzweig für einen Kondensatabscheider.

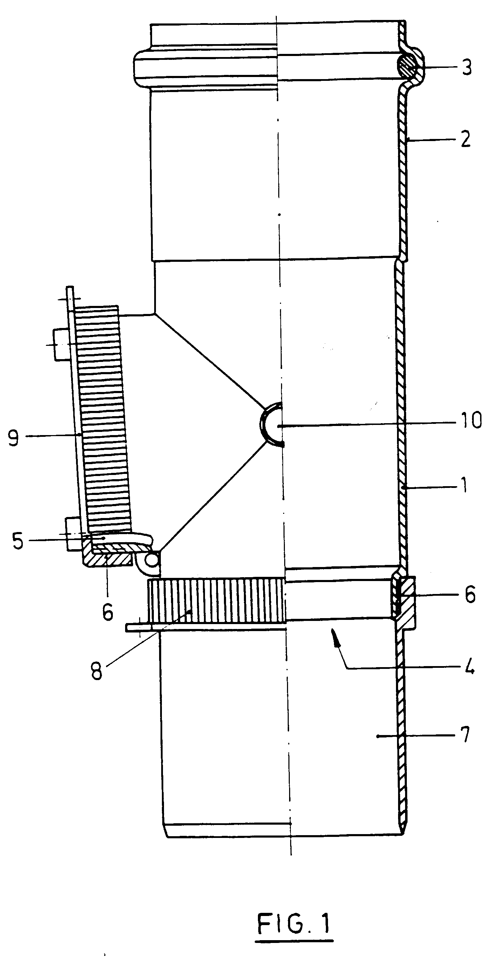

Fig. 1 zeigt ein universell einsetzbares Rohrleitungs-Formstück, das bei dem hier dargestellten Ausführungsbeispiel als Revisionsstück dient. Das Rohrleitungs-Formstück weist einen Rohrgrundkörper 1 auf, der an seinem in Fig. 1 oben angeordneten Austrittsende eine Rohranschlußmuffe 2 mit einem Dichtring 3 aufweist.

An seinem entgegengesetzten, unteren Ende weist der Rohrgrundkörper 1 eine erste Anschlußöffnung 4 auf, die bei dem Ausführungsbeispiel nach Fig. 1 das Eintrittsende bildet. In seiner Seitenwand (links in Fig. 1) ist der Rohrgrundkörper 1 mit einer zweiten, seitlichen Anschlußöffnung 5 versehen. Beide Anschlußöffnungen 4, 5 sind jeweils mit Außengewinde 6 versehen, das zum Anschluß eines weiteren Bauelements dient.

Auf das Außengewinde 6 der ersten Anschlußöffnung 4 ist ein Muffenanschlußstutzen 7 mittels eines Gewinderings 8 aufgeschraubt. An diesen Muffenanschlußstutzen 7 kann eine der Muffe 2 entsprechende Muffe eines anschließenden Rohrstücks angeschlossen werden.

Bei dem Ausführungsbeispiel nach Fig. 1 ist die zweite, seitliche Anschlußöffnung 5 mittels eines auf das Außengewinde 6 aufgeschraubten geschlossenen Deckels 9 verschlossen, der bei der hier als Beispiel angeführten Funktion als Revisionsdeckel dient, um eine Überprüfung und ggf. Reinigung der Abgasleitung zu ermöglichen, die zu einer Abgasanlage für Brennwertgeräte gehört.

Alle Teile, die zu dem Bausatz des Rohrleitungs-Formstücks gehören, sind aus schwerentflammbarem Polypropylen hergestellt.

Der Rohrgrundkörper 1 kann zusätzlich eine durch einen Schraubstopfen 10 verschlossene seitliche Meßöffnung aufweisen. Nach dem Entfernen des Schraubstopfens 10 kann eine Sonde für eine Rauchgasmessung eingeführt werden. Eine solche durch einen Schraubstopfen 10 verschließbare Meßöffnung kann auch im Deckel 9 vorgesehen sein. Die mit Gewinde versehene Meßöffnung kann auch zur Aufnahme eines Sicherheitstemperaturbegrenzers dienen.

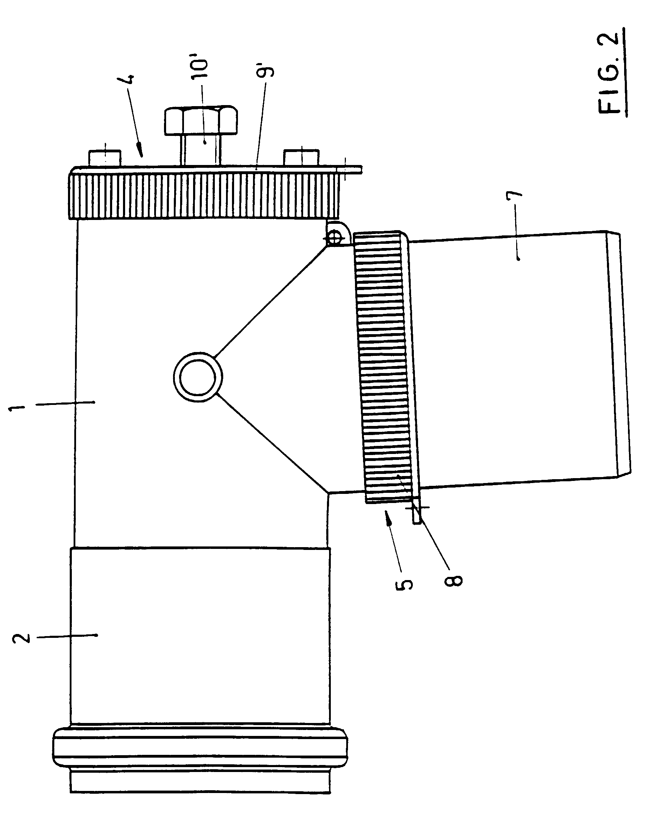

Fig. 2 zeigt ein anderes Ausführungsbeispiel des Rohrleitungs-Formstücks, das unter Verwendung im wesentlichen der gleichen Elemente, jedoch in anderer Kombination aufgebaut ist. Der mit dem Gewindering 8 versehene Muffenanschlußstutzen 7 ist hierbei auf die seitliche Anschlußöffnung 5 aufgeschraubt und bildet das Eintrittsende des Rohrleitungs-Formstücks, das somit ein Leitungsknie bildet. Die der Rohranschlußmuffe 2 fluchtend gegenüberliegende Anschlußöffnung 4 ist hierbei durch einen aufgeschraubten Deckel 9' verschlossen, der einen Kontroll- bzw. Revisionsverschluß bildet, durch den der anschließende horizontale Leitungsabschnitt einsehbar und kontrollierbar ist.

Zugleich ist beim Beispiel nach Fig. 2 dargestellt, daß der Deckel 9' in der schon vorher beschriebenen Weise eine durch einen Schraubstopfen 10' verschlossene Meßöffnung aufweisen kann. Nach dem Entfernen des Schraubstopfens 10' kann auch hier eine Rauchgas-Meßsonde eingeführt werden. Die mit Gewinde versehene Meßöffnung kann auch zur Aufnahme eines Sicherheitstemperaturbegrenzers dienen.

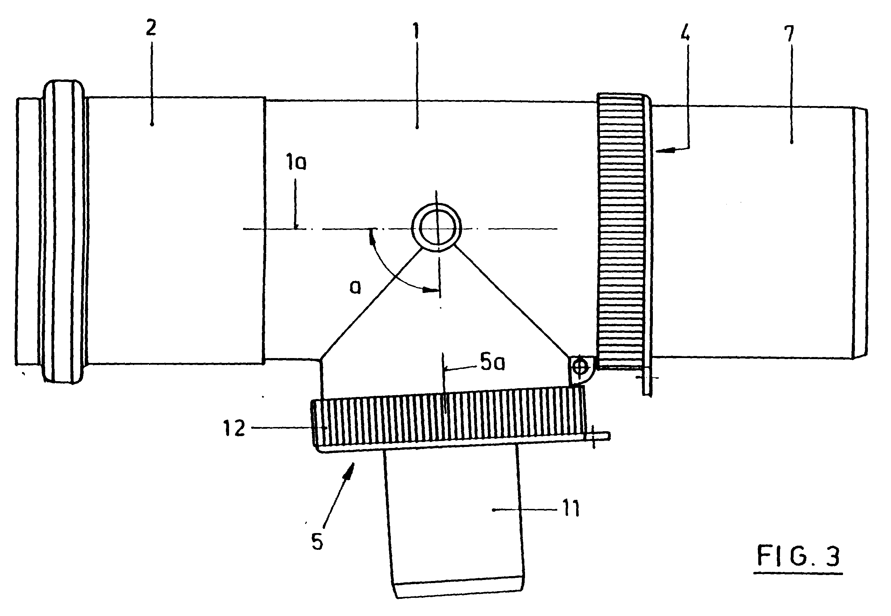

Fig. 3 zeigt die Verwendung des Rohrleitungs-Formstücks zum Anschluß eines Kondensatabscheiders. An den horizontal angeordneten Rohrgrundkörper 1 ist der Muffenanschlußstutzen 7 an der der Rohranschlußmuffe 2 gegenüberliegenden Anschlußöffnung 4 aufgeschraubt, wie dies schon beim Beispiel nach Fig. 1 beschrieben worden ist.

Das Verschlußstück, mit dem bei diesem Ausführungsbeispiel die seitliche Anschlußöffnung 5 verschlossen ist, weist einen Rohranschlußstutzen 11 mit wesentlich geringerem Durchmesser als der Rohrgrundkörper 1 auf. Der Rohranschlußstutzen ist in der schon beschriebenen Weise mittels eines Gewinderings 12 mit dem Außengewinde der Anschlußöffnung 5 verbunden. An den Rohranschlußstutzen 11 wird eine (nicht dargestellte) Kondensatableitung angeschlossen.

Man erkennt beim Ausführungsbeispiel nach Fig. 3, daß die Achse 5a der Anschlußöffnung 5 an der Seitenwand des Rohrgrundkörpers 1 mit der Längsachse 1a des Rohrgrundkörpers 1 zum Austrittsende hin einen Winkel a von über 90° bildet, vorzugsweise etwa 93°. Damit wird der Anforderung Rechnung getragen, daß alle horizontalen Leitungsabschnitte entgegen der Kondensat-Fließrichtung leicht ansteigend verlegt werden müssen, um einen ungehinderten Kondensatabfluß zu ermöglichen.

## Patentansprüche

1. Rohrleitungs-Formstück für Abgasanlagen für Brennwertgeräte mit einem Rohrgrundkörper (1), der an seinem Austrittsende eine Rohranschlußmuffe (2) und an seinem anderen Ende sowie in seiner Seitenwand jeweils eine Anschlußöffnung (4,5) aufweist, dadurch gekennzeichnet, daß der Rohrgrundkörper (1) an den beiden Anschlußöffnungen (4, 5) jeweils mit Außengewinde (6) versehen ist, daß ein Muffenanschlußstutzen (7) mittels eines Gewinderings (8) wahlweise mit einer der beiden Anschlußöffnungen (4, 5) verbindbar ist, daß ein Verschlußstück (9, 9', 11) auf die jeweils andere Anschlußöffnung (5, 4) aufschraubbar ist, und daß die Achse (5a) der Anschlußöffnung (5) an der Seitenwand des Rohrgrundkörpers (1) mit dessen Längsachse (1a) zum Austrittsende hin einen Winkel (a) von über 90°, vorzugsweise etwa 93° bildet.

2. Rohrleitungs-Formstück nach Anspruch 1, dadurch gekennzeichnet, daß das Verschlußstück ein geschlossener Deckel (9) ist.

3. Rohrleitungs-Formstück nach Anspruch 1, dadurch gekennzeichnet, daß das Verschlußstück ein Deckel (9') mit einer durch einen Schraubstopfen (10') verschlossenen Meßöffnung ist.

4. Rohrleitungs-Formstück nach Anspruch 1, dadurch gekennzeichnet, daß das Verschlußstück einen mit einem Gewinderings (12) versehenen Rohranschlußstutzen (11) zum Anschluß einer Kondensatableitung aufweist.

5. Rohrleitungs-Formstück nach Anspruch 1, dadurch gekennzeichnet, daß der Rohrgrundkörper (1) eine durch einen Schraubstopfen (10) verschlossene seitliche Meßöffnung aufweist.

## Claims

1. Pipe fitting for flue systems for condensing value unit, having a pipe body (1), which at its outlet end has a pipe connecting sleeve (2) and at its other end, as well as in its side wall, a connection hole (4, 5), in each case, characterised in that the pipe body (1) has an external thread (6) at each of the two connection holes (4, 5), that a sleeve connection piece (7) can be connected to either of the two connection holes (4, 5) by means of a threaded ring (8), that a cover (9, 9', 11) can be screwed onto the other respective connection hole (5, 4) and that the axis (5a) of the connection hole (5) along the side wall ofthe pipe body (1) forms an angle (a) of more than 90°, preferably about 93°, with the longitudinal axis (1a) of said pipe body towards the outlet end.

2. Pipe fitting according to claim 1, characterised in that the cover is a closed lid (9).

3. Pipe fitting according to claim 1, characterised in that the cover is a lid (9') having a measuring aperture sealed by means of a screw plug (10').

4. Pipe fitting according to claim 1, characterised in that the cover has a pipe connection sleeve (11) provided with a threaded ring (12) to connect a condensate drain.

5. Pipe fitting according to claim 1, characterised in that the pipe body (1) has a side measuring aperture sealed by means of a screw plug (10).

## Revendications

1. Raccord de tuyauterie pour systèmes de gaz d'échappement pour chaudières à condensation, comportant un corps de base tubulaire (1), qui présente, à son extrémité de sortie, un manchon d'accouplement (2) et, à son autre extrémité ainsi que dans sa paroi latérale, respectivement, une ouverture de raccordement (4, 5), caractérisé en ce que le corps de base tubulaire (1) est pourvu, aux deux ouvertures de raccordement (4, 5), respectivement, d'un filet externe (6), en ce qu'un raccord à manchon (7) peut être connecté, au moyen d'une bague filetée (8), au choix, à une des deux ouvertures de raccordement (4, 5), en ce qu'un obturateur (9, 9', 11) peut être vissé sur l'autre ouverture de raccordement respective (5, 4) et en ce que l'axe (5a) de l'ouverture de raccordement (5) sur la paroi latérale du corps de base tubulaire (1) forme avec son axe longitudinal (1a) vers l'extrémité de sortie un angle (a) de plus de 90°, de préférence d'environ 93°.

2. Raccord de tuyauterie selon la revendication 1, caractérisé en ce que l'obturateur est un couvercle fermé (9).

3. Raccord de tuyauterie selon la revendication 1, caractérisé en ce que l'obturateur est un couvercle (9') comportant une ouverture de mesure fermée par un bouchon fileté (10').

4. Raccord de tuyauterie selon la revendication 1, caractérisé en ce que l'obturateur présente un raccord tubulaire (11) pourvu d'une bague filetée (12) permettant le raccordement avec une dérivation de condensat.

5. Raccord de tuyauterie selon la revendication 1, caractérisé en ce que le corps de base tubulaire (1) présente une ouverture de mesure latérale fermée par un bouchon fileté (10).
